# EUROPEAN PATENT APPLICATION

(11) **EP 4 006 801 A1**
(43) Date of publication of application: **01.06.2022**
(21) Application number: 20460043.1
(22) Date of filing: 30.11.2020
(51) Int. Cl.: G06Q 10/10, G06F 21/31, G06Q 10/06

(54) **PROFILE MATCHING SYSTEM FOR A RECRUITMENT PLATFORM**

(71) Applicant: INHIRE Spolka z organiczona odpowiedzialnoscia, 00-614 Warszawa (PL)
(72) Inventor: Ladyzynski, Piotr, 05-410 Józefów (PL)

(57) **Abstract**

A data management system on a recruitment platform, configured to work on a physical or logical device, system or in an environment adapted to run an application including a web application and to generate a collection of personal data of the device user, **characterized in that,** it comprises:
- an application (Layer 0 - frontend) running on the device, communicating with a backend server (Layer 1 - backend);
- protocols enabling authorization and authentication of the device user, saving, reading the personal data and applicants' profiles as well as saving and reading the offerers' data;
- a backend server where the personal data of users are stored, communicating with a database layer;
- applicant's data stored on the platform and described by the n+1 dimensional vector X = (X₁, X₂, ..., Xₙ, W) where the Xₙ data are informational data and W is a numerical value;
- offerer's data stored on the platform described by the n+1 dimensional vector Y = (Y₁, Y₂, ..., Yₙ, O), where the Yₙ data are informational data and O is numerical value;
- a Matching Engine incorporating the implementation of the logic of a matching function f, which compares the offerer's data Y with the applicant's data X using the function f(X, Y) → {FALSE, TRUE}, realized on the backend server by first comparing the values Xₙ and Yₙ of individual vectors, which after getting a preliminary TRUE value for the data range X = (X₁, X₂, ..., Xₙ) and Y = (Y₁, Y2, ..., Yₙ) checks a logical condition W^{∗}k < O, where k is the offer adjustment factor.

## Description

The subject of the invention is a data management system on a recruitment platform containing applicants' and offerers' data in the form of databases, one of the main functionalities of which is to propose matching job offers based on a profile.

A data management system, in particular a system for managing personal data in digital scenarios, is known from the European patent EP 3149650 B1. A method for managing personal data of a user of a user device is disclosed. Said user device is adapted to have installed thereon an APP. Said APP is configured to require access to said personal data when running on said user device. The method comprises: - creating a certification for said APP, said certification being based on a corresponding statement providing information regarding the relationship between said APP and personal data of the user; - associating said certification to said APP for certifying said APP; - allowing the user to provide user-defined policies about exploiting the user personal data; - checking whether the user-defined policies provided by the user are compatible with requirements of said APP defined in the corresponding statement; - if the user-defined policies are compatible with said requirements of said APP defined in the statement, carrying out the following operations when the APP running on the user device requires to access personal data: - enforcing rules defined in the APP statement to guarantee that the APP accesses PD according to the requirements of said APP defined in the corresponding statement; - if, as a result of said enforcing rules,the requirements of said APP defined in the statement are not fulfilled, denying access to the personal data; -if, as a result of said enforcing rules,the requirements of said APP defined in the statement are fulfilled, carrying out the following operations: -if the APP requests to access real time personal data, collecting personal data from the user device according to the user-defined policies, and, if said personal data is to be collected, storing the accessed personal data in a secured digital space; -if the APP requests to access personal data already stored in the secured digital space,retrieving said personal data from the secured digital space according to the user-defined policies.

Data management system solutions known so far have been limited to a comparative analysis of offerer's and applicant's data by verifying the identity of the data contained in both profiles and sending a return message and/or certifying the data only in the case of their complete convergence. The consequence of this type of data verification is that despite pre-defined conditions presented by an offerer placed on a recruitment platform, the offerer is willing to negotiate and, consequently, to change conditions, influence on which were not allowed by the system. An analogous situation takes place in the case of requests made by an applicant, which can also be excessive in relation to the real conditions, which he/she is able to accept during the search of offers on recruitment platforms.

The aim of this invention is to develop such a data management system on a recruitment platform that will allow to compare offerer's and applicant's personalised data and to select from among them also those that are not fully compatible, but which will allow for possible negotiations between the parties, which will significantly broaden the spectrum of searching for offers when using the platform.

The essence of the system configured to work on a physical or logical device, system or in an environment adapted to run an application including a web application and to generate a collection of personal data of the device user according to the invention is characterized by the fact that the system comprises: an application (Layer 0 - frontend) running on the device, communicating with a backend server (Layer 1 - backend); protocols enabling authorization and authentication of the device user, saving, reading the personal data and applicants' profiles as well as saving and reading the offerers' data; a backend server where the personal data of users are stored, communicating with a database layer; applicant's data stored on the platform are described by the n+1 dimensional vector X = (X₁, X₂, ..., Xₙ, W) where the Xₙ data are informational data and W is a numerical value; offerer's data stored on the platform described by the n+1 dimensional vector Y = (Y₁, Y₂, ..., Yₙ, O), where the Yₙ data are informational data and the O is a numerical value; a Matching Engine incorporating the implementation of the logic of a matching function f, which compares the offerer's data Y with the applicant's data X using the function f(X, Y) → {FALSE, TRUE}, realized on the backend server by first comparing the values Xₙ and Yₙ of individual vectors, which after getting a preliminary TRUE value for the data range X = (X₁, X₂, ..., Xₙ) and Y = (Y₁, Y₂, ..., Yₙ) checks a logical condition W^{∗}k < O, where k is the offer adjustment factor.

Preferably, the function f(X, Y) implements the generation of conclusions based on the numerical values (L, O) of the Y vector, read by the Matching Engine from the database, which are taken into account when returning the output of the function f, checking the additional logical condition W^{∗}k < O (the range of numerical values (L, O) is stored in the encrypted database and it is not presented in the frontend layer).

Also preferably, the applicant's data stored on the platform are described by the n+i dimensional vector X = (X₁, X₂,..., Xₙ, W₁, W₂,..., Wᵢ) where Wₙ values are numerical ones and the applicant's data stored on the platform are described by the n+1 dimensional vector Y=(Y₁, Y₂, ..., Yₙ, O₁, O₂, ..., Oᵢ), while the matching engine checks the logical conditions Wᵢ^{∗}kᵢ < Oᵢ, while the function f(X, Y) implements the generation of conclusions from the numerical values (Lᵢ, Oᵢ) of the Y vector, read by the Matching Engine from the database, which are taken into account when returning the output of the function f, checking the additional logical condition of Wᵢ^{∗}kᵢ < Lᵢ, and the range of numerical values (Lᵢ, Oᵢ) is stored in the encrypted database and it is not presented in the frontend layer.

Also preferably, the application (Layer 0 - frontend) is an application created on the basis of the React framework, and when the communication between the application and the backend server (Layer 1 - backend) is done using API (application programming interface), and when the protocols enabling authorization and authentication of the user of the device, saving, reading personal data and profiles of applicants and saving and reading offerers' data are HTTPS encrypted protocols. What is more, it is also advantageous if the users' personal data are stored on the backend server in an encrypted PostgresSQL database (Layer 2 - database), with the communication with the database layer using the JDBC database protocol with encrypted communication and when the Matching Engine is a system component written in a high level language (Scala). Moreover, it is advantageous when the offer adjustment factor k is k = 0.8.

The use of the system according to the invention has allowed for significant improvement of data comparison processes - shortening a recruitment process, and at the same time has allowed to compare offerer's and applicant's personalised data and to select from among them also those which are not fully compatible, but which allowed for possible negotiations between the parties, as a result of which the effectiveness of the processing of offers by both the applicants and the offerers using the platform has been improved, which has significantly increased the number of paired and positively processed offers.

### Embodiment 1

According to the invention, the system is configured to work on a physical or logical device, system or in an environment adapted to run an application including a web application and to generate a collection of personal data of the device user, which can be both the applicant and the offerer. The user's device in question may be, for example, a mobile device such as a smartphone, tablet as well as an application server, personal computer, or personal cloud environment.

Application users interact with the platform via an application (Layer 0 - frontend) created on the basis of the React framework running on the device, which communicates with the backend server via API (application programming interface) (Layer 1 - backend). During the communication of the application with the layer of backend servers, which takes place using the encrypted HTTPS protocol, the device user is authorized and authenticated, personal data and candidate profiles are saved and read, and offerer data is saved and read.

Users' personal data are stored on the backend server in an encrypted PostgresSQL database (Layer 2 - database), which stores data on hard disks provided by a cloud service provider. The communication of the backend server with the database layer takes place using the JDBC database protocol with encrypted communication. When an account is deleted by a candidate, his/her personal data are immediately removed from the digital media or the database.

The data stored on the platform are described by the n+1 dimensional vector, which for a given applicant X takes the form X = (X₁, X₂, ..., Xₙ, W) fully defining his/her profile, in which Xₙ data are informational data defining the applicant's profile, while W is a numerical value expressed as a non-negative integer, which is preferably the value of remuneration that the applicant is able to accept. The data are stored in an encrypted database.

The analogous data described by the n+1 dimensional vector, which for a given offerer Y takes the form Y = (Y₁, Y₂, ..., Yₙ, O), which also fully defines the profile, in which Yₙ are informational data defining the oferrer, while O is a numerical value expressed as a non-negative integer, complementary to the value of W, which is preferably the value of remuneration that the oferrer is able to offer.

The Y data of all offerers are compared with the X data of the applicant who uses the application by comparing his/her profile saved in the form of the X vector and the Yᵢ vector of an individual offerer, which constitutes a set of all Y vectors and by comparing them using the function f(X, Y) → {FALSE, TRUE}, whereby the matching is performed on the backend server by the so-called Matching Engine, which is a system component written in a high level language (Scala), incorporating the implementation of the logic of the matching function f. This component for a given offer and a given candidate retrieves corresponding records from the database, then performs calculations and returns the value of the f(X, Y) function: TRUE or FALSE. The data in the f(X, Y) function are first compared by comparing the Xₙ and Yₙ data of individual vectors, whereby after receiving the preliminary TRUE value for the data range X = (X₁, X₂, ..., Xₙ) and Y = (Y₁, Y₂, ..., Yₙ), the condition for matching the offer is verified in terms of the numerical values of the preferably offered remuneration by the offeror O and the financial expectations of the applicant W. The logical condition W^{∗}k < O is checked, where k is the offer matching factor which is advantageously k = 0.8. The function f finally returns TRUE if this logical condition is also fulfilled.

Having received the TRUE value, the applicant X receives access to the offer Y and has the possibility to submit his/her application using the application.

### Embodiment 2

In the second embodiment of the invention, the system is analogous to the system according to the first embodiment, except that the offerer when entering data on the platform has the possibility to mark the option to enter a range of numbers (L, O) in the vector, where L - preferably means the minimum salary offered (minimum point of salary). The Matching Engine reads the range (L, O) from the database and takes it into account when returning the output of the function f, which additionally checks the logical condition W^{∗}k < O.

### Embodiment 3

In the third embodiment of the invention, the system is analogous to the system according to the second embodiment, except that the offerer when defining the offer on the platform has the possibility to hide the range of numbers (L, O), when defining the offer Y the offerer marks the option to hide the salary bracket (L,O), salary brackets are saved in an encrypted database. If the offerer uses the option of hiding the salary bracket - the Matching Engine reads the salary bracket from the database and takes it into account when returning the output of the function f, but the salary bracket is not presented to a candidate in the frontend layer, when returning the output of the function f, which additionally checks the logical condition W^{∗}k < O, if the TRUE value is obtained, the applicant X gets access to the offer Y and has the possibility to submit his/her application using the application.

### Embodiment 4

In the fourth embodiment of the invention, the system is analogous to the system according to any of embodiments 1-3, except that the n+i dimensional vector of a given applicant X takes the form X = (X₁, X₂, ..., Xₙ, W₁, W₂,..., Wᵢ), in which Wₙ values are numerical values which in the logical function of f(X, Y): TRUE or FALSE are compared with the complementary data of the offerer Y of the n+i dimensional vector Y = (Y₁, Y₂, ..., Yₙ, O₁, O₂, ..., Oᵢ), when returning the output of the function f, which additionally checks the logical condition Wᵢ^{∗}kᵢ < Lᵢ if the TRUE value is obtained, the applicant X is given access to the offer Y and has the possibility to submit his/her application using the application, but for kᵢ it is possible to define it for each of the conditions individually.

### Embodiment 5

In the fifth embodiment of the invention, the system is analogous to the system according to the fourth embodiment, except that the offerer when entering data on the platform has the possibility to mark the option to enter a range of numbers (Lᵢ, Oᵢ), for returning the output of the function f, which additionally checks the logical condition Wᵢ^{∗}kᵢ < Oᵢ if the TRUE value is obtained, the applicant X gets access to the offer Y and has the possibility to submit his/her application using the application, but for ki it is possible to define it for each of the conditions individually.

## Claims

1. A data management system on a recruitment platform, configured to work on a physical or logical device, system or in an environment adapted to run an application including a web application and to generate a collection of personal data of the device user, **characterized in that,** it comprises:
- an application (Layer 0 - frontend) running on the device, communicating with a backend server (Layer 1 - backend);
- protocols enabling authorization and authentication of the device user, saving, reading the personal data and applicants' profiles as well as saving and reading the offerers' data;
- a backend server where the personal data of users are stored, communicating with a database layer;
- applicant's data stored on the platform and described by the n+1 dimensional vector X = (X₁, X₂, ..., Xₙ, W) where the Xₙ data are informational data and W is a numerical value;
- offerer's data stored on the platform described by the n+1 dimensional vector Y = (Y₁, Y₂, ..., Yₙ, O), where the Yₙ data are informational data and O is numerical value;
- a Matching Engine incorporating the implementation of the logic of a matching function f, which compares the offerer's data Y with the applicant's data X using the function f(X, Y) → {FALSE, TRUE}, realized on the backend server by first comparing the values Xₙ and Yₙ of individual vectors, which after getting a preliminary TRUE value for the data range X = (X₁, X₂, ..., Xₙ) and Y = (Y₁, Y₂, ..., Yₙ) checks a logical condition W^{∗}k < O, where k is the offer adjustment factor.

2. The data management system as claimed in claim 1, **characterised in that,** the function f(X, Y) includes the possibility of implementing a range of numerical values (L, O) in the Y vector, read by the Matching Engine from the database, which are taken into account when returning the output of the function f, checking the additional logical condition W^{∗}k < O.

3. The data management system as claimed in claim 2, **characterised in that,** the range of numerical values (L, O) is stored in the encrypted database and is not presented in the frontend layer.

4. The data management system as claimed in claim 1, **characterised in that,** the applicant's data stored on the platform are described by the dimensional vector n+i X = (X₁, X₂, ..., Xₙ, W₁, W₂, ..., Wᵢ), in which the Wₙ values are numerical ones and the offerer's data stored on the platform are described by the dimensional vector n+1 Y = (Y₁, Y₂, ..., Yₙ, O₁, O₂, ..., Oᵢ), while the matching engine checks the logical conditions Wᵢ^{∗}kᵢ < Oᵢ.

5. The data management system as claimed in claim 4, **characterised in that,** the function f(X, Y) includes the possibility of implementing a range of numerical values (Lᵢ, Oᵢ) in the Y vector, read by the matching engine from the database, which are taken into account when returning the output of the function f, checking the additional logical condition of Wᵢ^{∗}kᵢ < Oᵢ.

6. The data management system as claimed in claim 5, **characterised in that,** the range of numerical data (Lᵢ, Oᵢ) is stored in the encrypted database and is not presented in the frontend layer.

7. The data management system as claimed in claim 1, **characterised in that,** the application (Layer 0 - frontend) is an application created based on the React framework.

8. The data management system as claimed in claim 1, **characterised in that,** the communication between the application and backend server (Layer 1 - backend) takes place using API (application programming interface).

9. The data management system as claimed in claim 1, **characterised in that,** the protocols enabling authorization and authentication of the user of the device, saving, reading personal data and profiles of applicants and saving and reading offerers' data are HTTPS encrypted protocols.

10. The data management system as claimed in claim 1, **characterised in that,** the users' personal data are stored on the backend server in an encrypted PostgresSQL database (Layer 2 - database) with the communication with the database layer using the JDBC database protocol with encrypted communication.

11. The data management system as claimed in claim 1, **characterised in that,** the Matching Engine is a system component written in a high level language (Scala).

12. The data management system as claimed in claim 1 or claim 2 or claim 4 or claim 5, **characterised in that,** the offer adjustment factor k is k = 0.8.
